# EUROPÄISCHE PATENTANMELDUNG

(11) **EP 1 914 538 A1**
(43) Veröffentlichungstag der Anmeldung: **23.04.2008**
(21) Anmeldenummer: 06022036.5
(22) Anmeldetag: 20.10.2006
(51) Int. Cl.: G01N 21/64, G01N 21/94

(54) **Verfahren und Vorrichtung zum Erfassen der Sauberkeit oder der Verschmutzung einer Teileoberfläche**

(71) Anmelder: SITA Messtechnik GmbH, 01217 Dresden (DE)
(72) Erfinder: Haberland, Ralf, Dr.-Ing., 01257 Dresden (DE); Huber, Veit, Dipl.-Ing., 09131 Chemnitz (DE); Schümann, Daniel, Dipl.-Ing., 01328 Dresden (DE)
(74) Vertreter: Ilberg, Roland

(57) **Zusammenfassung**

Bei einem Verfahren und einer Vorrichtung zum Erfassen der Sauberkeit oder der Verschmutzung einer Teileoberfläche durch Messen der Intensität der-Eigenfluoreszenz der Verschmutzung sowie einer vorhergehenden Kalibrierung auf Bezugsoberflächen wird ein Zusammenhang zwischen der Intensität der Fluoreszenz und der Sauberkeit oder Verschmutzung der Teileoberfläche hergestellt und benutzt.

## Beschreibung

### Anwendungsgebiet der Erfindung

Die Erfindung betrifft ein Verfahren und eine Vorrichtung zum Erfassen der Sauberkeit oder der Verschmutzung einer Teileoberfläche durch Messen der Intensität der Eigenfluoreszenz der Verschmutzung.

Eine hinreichende Sauberkeit der Teileoberfläche ist in vielen Fällen Vorrausetzung zum Erreichen einer hohen Qualität der einer Formgebung oder Reinigung nachfolgenden Prozessschritte, wie beispielsweise Oberflächenbehandlungs- bzw. Oberflächenbeschichtungsprozesse, wie Phosphatieren, Lackieren und Drucken. Eine hinreichende Sauberkeit der Teileoberfläche ist auch Vorraussetzung für die nachfolgende Montage sowie die Funktion der Teile. Verschmutzte bzw. unzureichend saubere Teileoberflächen können zu Mängeln bei der Oberflächenqualität der Produkte und dadurch zu hohen Kosten durch Folgeschäden führen. Es ist deshalb notwendig, die Teileoberflächen vor einer Weiterbehandlung entsprechend zu kontrollieren.

Eine Hauptanwendung der Erfindung ist die Metallteileverarbeitung. Beispielsweise werden beim Umformen von Metallblechen diese mit so genannten Walz- oder Umformölen belegt. Bei der Formgebung von Metallteilen durch spanende Bearbeitung kommen zum Beispiel Kühlschmierstoffe zum Einsatz, welche auf der Metallteiloberfläche haften. Zum Lagern von Metallteilen werden im Allgemeinen Korrosionsschutzöle auf die Teileoberflächen aufgebracht. Die beispielhaft genannten Stoffe stellen meist für die nachfolgenden Prozessschritte Verunreinigungen dar und müssen so abgereinigt werden, dass mit dem Reinigungsergebnis eine für den nachfolgenden Prozessschritt hinreichend gute Sauberkeit bzw. hinreichend geringe Verschmutzung der Teileoberflächen gewährleistet werden kann.

### Stand der Technik

Am Markt sind Messgeräte erhältlich, mit denen Verschmutzungen auf technischen Oberflächen erfasst werden können.

So wird auf dem Markt ein Messgerät /1/ angeboten, welches auf Basis der laserinduzierten zeitaufgelösten Fluoreszenzspektroskopie den Reinheitsgrad metallischer Oberflächen erfasst. Dabei wird ein Messpunkt auf der Oberfläche mittels eines Mikrochiplasers optisch angeregt. Die resultierende Fluoreszenz wird über eine Detektoreinheit ausgewertet. Dieses Messgerät arbeitet dabei nach dem Off-Axis-Prinzip. Dabei liegt zwischen dem anregenden Strahl und der ausgewerteten Emission ein bestimmter Winkel, von beispielsweise 90°. Das erfordert eine präzise Positionierung des Sensors über der Oberfläche. Der Nutzer erhält Messwerte (Counts), die der Anzahl der erfassten Photonen entsprechen. Anhand dieses ermittelten Zahlenwertes kann der Nutzer eine Aussage über die Kontamination der Oberfläche treffen.

Weiterhin ist ein Messgerät SurfSens /2/ bekannt, welches einen Lichtstrahl mit einer bestimmten Leuchtdichte unter einem festgelegten Winkel auf die Oberfläche strahlt. Die von einer Photodiode erfasste Strahlung wird von auf der Oberfläche vorhandenen filmischen Kontaminationen durch Streuung, Reflektionen innerhalb der filmischen Verschmutzungen sowie Lichtbrechung an der Grenzfläche zwischen Kontamination und Luft beeinflusst. Das Messgerät ist zum Durchführen der Messungen auf die zu prüfende Oberfläche aufzusetzen, wodurch der Abstand der LED zur Oberfläche des Prüflings und der Winkel zwischen auftreffenden Messstrahl und Oberfläche festgelegt ist. Durch das Aufsetzen des Messgerätes wird das Umgebungslicht vom Messstrahl abgeschirmt. Standardmäßig können mit diesem Messgerät ausschließlich Messungen auf ebenen Oberflächen durchgeführt werden. Für zylindrische Bauteile sind für den jeweiligen Radius spezielle Messköpfe erforderlich. Die Messwertausgabe erfolgt dimensionslos anhand eines Indikatorwertes zwischen -1000 und +1000. Der sauberen Referenzoberfläche wird der Wert 0 zugewiesen. Je stärker die zu prüfende Oberfläche verschmutzt ist, desto höher ist die vom Messgerät ermittelte Abweichung vom Wert 0.

Aus US 6956228 B2 ist ein Messverfahren bekannt, bei dem die Sauberkeit einer Oberfläche dadurch ermittelt wird, dass ein Infrarotstrahl auf die Oberfläche gestrahlt wird und die durch die Kontamination absorbierte infrarote Energie bei einer ersten und zweiten Wellenlänge der infraroten Strahlung erfasst wird. Die Differenz der absorbierten Strahlung bei der ersten und zweiten Wellenlänge korreliert mit der Menge der Verschmutzung auf der Oberfläche. Dabei wird der Strahl des infraroten Lichtes unter einem bestimmten Winkel auf den Messpunkt gestrahlt und die Intensität des unter einem bestimmten Winkel reflektierten Strahls erfasst. Dieses Messverfahren erfordert eine präzise Positionierung des Sensors über der Oberfläche. Weiterhin ist ein Verfahren zum Ermitteln der Beziehung zwischen erhaltenem Messwert und Verschmutzung beschrieben, bei dem die Differenz der absorbierten Energie anhand von Referenzproben mit bekannter Verschmutzung gemessen wird.

Aus der US 5756885 A1 ist ein Verfahren zum Bestimmen der Sauberkeit einer Oberfläche bekannt, bei der ein Flüssigkeitstropfen auf die Oberfläche aufgebracht wird und anhand einer Schablone die Ausbreitung dieses auf der Oberfläche erfasst wird. Verläuft der Tropfen auf der Oberfläche so, dass seine Fläche größer ist oder innerhalb der Toleranz der Schablone liegt ist die Oberfläche hinreichend sauber. Die durch den Tropfen auf die Oberfläche aufgebrachte Flüssigkeit muss anschließend abgereinigt werden, da diese im Allgemeinen eine Verschmutzung der Oberfläche darstellt und die Nachfolgeprozesse beeinträchtigen kann.

In der DE 19846775 A1 ist ein automatisches Verfahren zum Erkennen von Ölsorten auf technischen Oberflächen angegeben, welches auf der Eigenfluoreszenz des Öls beruht. Verschiedene Ölsorten und -mengen führen dabei zu einer spektralen Verschiebung der anregenden Strahlung. Da allerdings die Kontrolle des Reinigungsergebnisses wegen der zu geringen Ölmenge und folglich wegen der zum Detektieren zu geringen Eigenstrahlung des Öls bei dem verwendeten Messverfahren problematisch ist, wird vorgeschlagen, das Öl mit einer fluoreszierenden Tracer-Substanz zu versetzen. Später wird die gereinigte Oberfläche bestrahlt und die Intensität der Fluoreszenzstrahlung bei einer vorgegebenen Wellenlänge oder deren Wellenlängenabhängigkeit gemessen, woraus entweder die Restölbeladung oder die Ölsorte bestimmt wird.

Gemäß der Schrift DE 19649925 A1 ist es vorgesehen, einen Reinigungsprozess zu bewerten, indem mit fluoreszierenden Substanzen verunreinigte Testkörper mit durch den Reinigungsprozess geführt werden. Eine Messung der Verschmutzung der eigentlichen zu reinigenden Teile erfolgt dabei nicht.

Aus der WO 2006/092317 A1 ist ein Fluoreszenzmessgerät bekannt, welches geeignet ist, auf Oberflächen verbliebene Restölbeläge zu detektieren. Dazu werden die fluoreszierenden Beläge mit UV-Licht bestrahlt und die Intensität der Fluoreszenz erfasst und universell in mV ausgegeben. Eine Bezugnahme auf die Schichtdicke bzw. Ölmenge oder gar eine prozessabhängige Bewertung bzw. Kalibrierung der Ausgabe erfolgt dabei nicht.

### Wesen der Erfindung

Der Erfindung liegt die Aufgabe zugrunde, ein Verfahren und eine Vorrichtung zum Erfassen der Sauberkeit oder der Verschmutzung einer Teileoberfläche mit beliebiger Geometrie durch Messen der Intensität der Eigenfluoreszenz der auf der Teileoberfläche vorhandenen Verschmutzung anzugeben. Insbesondere soll dem Nutzer ermöglicht werden, einfach und bedienerfreundlich die Sauberkeit oder Verschmutzung, die einen für den Nutzer einfach erfassbaren und interpretierbaren Bezugswert darstellt, mit wenigen Schritten, beispielsweise am Reinigungs- oder Verarbeitungsprozess, zu erfassen. Die Teileoberfläche soll dabei nicht durch Hilfsmittel oder die Vorrichtung selbst verschmutzt werden. Ein weiteres Ziel ist das Erhöhen der Prozesssicherheit der Verarbeitungs- oder Reinigungsprozesse durch das Bewerten des Reinigungsergebnisses und der damit gegebenen Möglichkeit, schlussfolgernd so auf die Parameter des Reinigungsprozesses einzuwirken, dass eine hinreichende Oberflächenqualität der Produkte gewährleistet werden kann.

Die Aufgabe wird erfindungsgemäß durch ein Verfahren nach den Merkmalen des Anspruchs 1 sowie durch eine Vorrichtung nach den Merkmalen des Anspruchs 7 gelöst. Vorteilhafte Weiterbildungen sind in den abhängigen Ansprüchen angegeben.

Das erfindungsgemäße Verfahren und die erfindungsgemäße Vorrichtung ermöglichen es dem Nutzer, mit wenigen einfachen Schritten für eine definierte Teileklasse einen Zusammenhang zwischen der gemessenen Intensität der Fluoreszenz und der Sauberkeit oder der Verschmutzung zu erstellen und bei nachfolgenden Messungen die für die jeweilige Teileklasse erfasste Sauberkeit oder Verschmutzung als Messergebnis zu erhalten. Eine Teileklasse definiert sich dabei im Sinne der Erfindung durch ein sich optisch gleich verhaltendes Material der Teile bei vergleichbarer Oberflächenrauhigkeit. Des Weiteren ermöglicht das Verfahren eine Bewertung des Reinigungsergebnisses durch Vergleich des erfassten Sauberkeitswertes oder Verschmutzungswertes sowie eines ermittelten Grenzwertes für eine für den Nachfolgeprozess hinreichende Sauberkeit oder hinreichend kleine Verschmutzung.

Ein Vorteil des erfindungsgemäßen Verfahren ist darin begründet, dass der ermittelte Wert der Sauberkeit oder der Verschmutzung beispielsweise in Prozent (%) für den Nutzer einfach erfassbar und interpretierbar ist und das verfahrensgemäße Ermitteln der Beziehung zwischen der gemessenen Intensität der Fluoreszenz und dem Sauberkeitswert oder dem Verschmutzungswert ohne spezifisches Fachwissen zur Fluoreszenz einfach mit wenigen Schritten durchgeführt werden kann.

Dazu werden erfindungsgemäß die durch das Messprinzip bedingten systematischen und zufälligen Messabweichungen mittels vorgegebener Messparameter und Messwertbehandlung automatisch so minimiert, dass diese vernachlässigbar sind. Das Erfassen des Restschmutzes erfolgt durch Messen der Intensität der durch die Fluoreszenz emittierten Strahlung eines Messpunktes bei dessen Anregung mit einer Strahlung im UV - Bereich. Die ausgesandte Strahlung mit dieser Wellenlänge regt die Fluoreszenz insbesondere bei Ölen, Kühlschmierstoffen, Korrosionsschutzmitteln an. Dabei ist die Intensität der emittierten Strahlung um so stärker, je höher die Restschmutzbelegung des erfassten Messpunktes ist. Bei nicht vorhandener Restschmutzbelegung der Oberfläche des zu prüfenden Teils wird insbesondere bei Metalloberflächen keine Strahlung emittiert. Die Intensität der Fluoreszenz der zu erfassenden Kontaminationen nimmt mit der Zeit durch die Anregung mittels Strahlung im Bereich des ultravioletten Lichtes irreversibel ab. Deshalb ist es vorgesehen, automatisiert die Messdauer je Messpunkt einzuschränken und Wiederholmessungen auf diesem Messpunkt zu vermeiden.

Beim Messen der Intensität der Fluoreszenz wird eine automatische Kompensation des Umgebungslichtes durchgeführt, wobei eine Photodiode das Umgebungslicht erfasst und von dem eigentlichen Messwert subtrahiert. Da die Erfassung des Umgebungslichtes und die Messung der Intensität der Fluoreszenz zeitversetzt stattfinden, können schnelle Änderungen des Lichtes starke Messabweichungen erzeugen. Diese zufälligen Messabweichungen werden mit dem erfindungsgemäßen Verfahren durch eine automatische Mittelung und Extremwertbeseitigung entfernt.

Weiterhin tritt bei dem Messen der Intensität der Fluoreszenz eine so genannte Anfangsdrift der ersten n Messwerte bei der ersten Messung auf, die in einer Erwärmung der optischen Bauelemente begründet ist. Mit der verfahrensgemäßen Initialisierungsmessung, bei der die ersten n Messwerte automatisch verworfen werden, wird diese systematische Messabweichung eliminiert.

Die gemessene Intensität der Fluoreszenz wird bei Teilen ohne Schmutz dem Sauberkeitswert 100% oder dem Verschmutzungswert von 0% zugeordnet. Die gemessene Intensität der Fluoreszenz von ungereinigten Teilen wird durch einen Sauberkeitswert von 0% oder Verschmutzungswert von 100% ausgedrückt. Weiterhin dienen Proben, welche gerade noch für die Anforderungen des Nachfolgeprozesses hinreichend sauber oder hinreichend wenig verschmutzt sind, zum Festlegen des Grenzwertes einer Sauberkeitsklasse 'hinreichend sauber' oder einer Verschmutzungsklasse 'hinreichend gering verschmutzt'. Eine automatische Bewertung der Sauberkeit oder Verschmutzung der Oberfläche kann durch Zuordnen des ermittelten Sauberkeits- oder Verschmutzungswertes zu einer Sauberkeitsklasse beispielsweise 'ideal sauber', 'hinreichend sauber', 'unzureichend sauber' oder einer Verschmutzungsklasse, beispielsweise 'verschmutzt', 'hinreichend gering verschmutzt', 'unverschmutzt' erfolgen. Das erfindungsgemäße Ermitteln der Beziehung zwischen der gemessenen Intensität der Fluoreszenz und der Sauberkeit oder der Verschmutzung erfolgt anhand von Referenzproben bzw. Referenzteilen. Referenzproben stellen hierbei Teile ohne Restschmutz, gerade noch für die Anforderungen des Nachfolgeprozesses hinreichend saubere Teile sowie ungereinigte Teile dar. Das Ermitteln des Messwertes der Intensität der Fluoreszenz für den Wert 100% sauber oder 0% verschmutzt erfolgt anhand einer Referenzprobe, welche keine bzw. eine vernachlässigbare Restschmutzbelegung auf der Referenzoberfläche aufweist sowie eine mit der zu testenden Teileklasse vergleichbare Oberflächenrauhigkeit besitzt und aus dem gleichen Material besteht. Um beim Ermitteln der Beziehung zwischen dem Messwert der Intensität der Fluoreszenz und der Sauberkeit oder Verschmutzung für die späteren Messungen entstehende systematische Messabweichung, beispielsweise verursacht durch einen Fingerabdruck auf der Referenzoberfläche, zu vermeiden, werden nach dem erfindungsgemäßen Verfahren m festgelegte Messpunkte auf der Referenzoberfläche erfasst, wobei bei jedem Messpunkt automatisch eine festgelegte Anzahl von Einzelmessungen durchgeführt wird und anschließend für jeden Messpunkt eine automatische Mittelung und Ausreißerbeseitigung der Einzelmessungen erfolgt. Die Anzahl der Einzelmessungen können durch den Nutzer voreingestellt werden, um ein Optimum zwischen Messgenauigkeit und Messdauer zu erzielen. Anschließend erfolgt eine automatische Mittelung und Ausreißerbeseitigung der ermittelten Messwerte der Messpunkte. Das Ermitteln des Messwertes der Intensität der Fluoreszenz für den Wert '0% sauber' oder '100% verschmutzt' erfolgt z.B. anhand einer ungereinigten oder mit einer mit einem gerade noch sichtbaren Film der Verschmutzung beaufschlagten Referenzprobe. Dabei werden nach dem erfindungsgemäßen Verfahren *k* festgelegte Messpunkte auf der Referenzoberfläche erfasst, wobei bei jedem Messpunkt eine festgelegte Anzahl von Einzelmessungen durchgeführt werden und anschließend für jeden Messpunkt eine Mittelung und Ausreißerbeseitigung der Einzelmessungen erfolgt. Anschließend erfolgt eine Mittelung der ermittelten Messwerte der Messpunkte. Wird bei späteren Messungen eine Intensität der Fluoreszenz gemessen, die über dem Wert der Intensität der Fluoreszenz für '0% sauber' oder '100% verschmutzt' liegt, dann wird diesem Messwert der Intensität der Fluoreszenz automatisch der Wert '0% sauber' oder '100% verschmutzt' zugewiesen. Der Vorteil des erfindungsgemäßen Verfahrens ist, dass das Ermitteln der Beziehung zwischen der Sauberkeit oder der Verschmutzung und der Intensität der Fluoreszenz anhand der beiden beschrieben Verfahrenschritte und Referenzproben schnell und einfach durch den Nutzer mittels der erfindungsgemäßen Vorrichtung durchgeführt werden kann, wobei die Vorrichtung dem Nutzer über Nutzerschnittstellen, beispielsweise ein Display und einem Programm zur Nutzerführung, die einzelnen Verfahrensschritte vorgibt.

Nach dem erfindungsgemäßen Verfahren wird durch die erfindungsgemäße Vorrichtung automatisch anhand der beiden ermittelten Referenzproben eine mathematische Beziehung zwischen der Intensität der Fluoreszenz und der Sauberkeit oder der Verschmutzung hergestellt. Das kann beispielsweise eine lineare oder auch eine nichtlineare Funktion sein. Anhand von Proben, welche gerade noch den Anforderungen an die Sauberkeit oder an die maximale Verschmutzung des Nachfolgeprozesses entsprechen, kann ein Grenzwert für die Sauberkeitsklasse 'hinreichend sauber' oder die Verschmutzungsklasse 'hinreichend gering verschmutzt' festgelegt werden, wodurch eine Bewertung der Sauberkeit oder Verschmutzung der Teileoberfläche beispielsweise mittels einer Nutzerschnittstelle der Vorrichtung möglich ist.

In einer Ausgestaltung werden beim Messen der Sauberkeit oder Verschmutzung mehrere Messpunkte der Oberfläche, die beispielsweise durch eine Schablone oder eine automatische Koordinatensteuerung vorgegeben sind, erfasst und durch die Vorrichtung automatisch der Messwert des Messpunktes mit der kleinsten Sauberkeit oder größten Verschmutzung ausgegeben. Das hat den Vorteil, dass die Sauberkeit der Teileoberfläche immer von dem Messpunkt mit der größten Verschmutzung bzw. kleinsten Sauberkeit bestimmt wird, wobei eben an diesem Messpunkt beispielsweise die Haftfestigkeit einer nachfolgenden Beschichtung beeinträchtigt werden kann.

Die Messungen können auf Teileoberflächen mit beliebiger Geometrie, beispielsweise auf gekrümmten Oberflächen oder in Vertiefungen, durchgeführt werden. Für die Bedienung vorteilhaft ist es, wenn dem Nutzer die zur Messung notwendigen Vorgänge automatisch vorgegeben werden und auf komplizierte Einstellungen verzichtet wird. Mittels der erfindungsgemäßen Vorrichtung und dem Verfahren wird es dem Nutzer ermöglicht, eine Messung der Sauberkeit oder Verschmutzung mit nur einem Knopfdruck direkt zu starten. Die Vorrichtung eignet sich daher besonders für Kontrollen der Sauberkeit oder der Verschmutzung unmittelbar am Ver- oder Bearbeitungsprozess. Anhand der Nutzerschnittstellen der erfindungsgemäßen Vorrichtung kann der Nutzer sofort eine Bewertung der Sauberkeit oder der Verschmutzung der Teileoberfläche vornehmen und gegebenenfalls auf den Prozess so einwirken, dass eine hinreichende Oberflächenqualität der Teileoberfläche gewährleistet werden kann.

In einer weiteren Ausführung ist die Vorrichtung so ausgestaltet, dass diese automatisch die Sauberkeit oder die Verschmutzung einer Teileoberfläche erfasst, bewertet und auf dieser Grundlage den Prozess, beispielsweise durch Anpassen der Reinigerkonzentration in einem Reinigungsprozess, steuern kann.

Die Erfindung soll nachstehend anhand eines Ausführungsbeispiels erläutert werden. In den zugehörigen Zeichnungen zeigt hierzu:
**Fig. 1** eine erste Ausführung der Vorrichtung für das Durchführen des erfindungsgemäßen Verfahrens,
**Fig. 2** und **Fig. 3** vorteilhafte weitere Ausführungen der Vorrichtung und
**Fig. 4** ein Ausführungsbeispiel zur Nutzerführung mittels eines Displays zum Messen der Sauberkeit und zum Ermitteln des Zusammenhangs zwischen der Intensität der Fluoreszenz und der Sauberkeit, in diesem Ausführungsbeispiel Kalibrieren genannt.

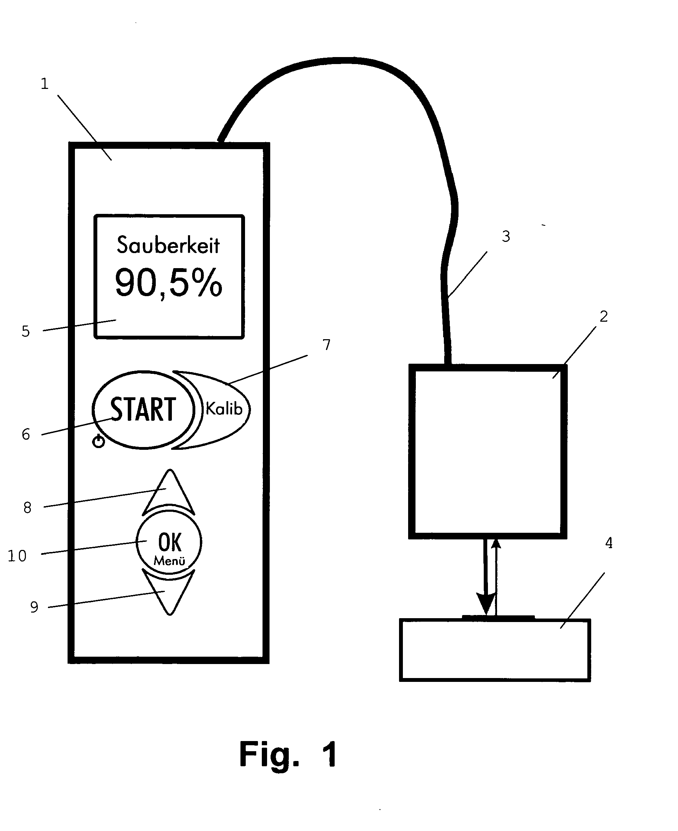

Gemäß **Fig. 1** ist eine Vorrichtung als komplexe Einheit in einem Gehäuse **1**, welches beispielsweise zur Bedienung in der Hand gehalten oder auf eine Arbeitsunterlage, beispielsweise einen Tisch, gestellt werden kann, sowie in einem Sensorgehäuse **2**, welches über ein Verbindungskabel **3** mit dem Gehäuse **1** verbunden ist und zum Durchführen einer Messung auf einem Teil **4** in der Hand gehalten oder beispielsweise an einem Stativ befestigt werden kann, integriert. Das Gehäuse **1** enthält Bedien- und Anzeigemittel, wobei ein Display **5** zur Messwertausgabe sowie Anzeige der wichtigsten Gerätezustände und Parameter der Vorrichtung sowie zum Anzeigen der durch den Nutzer durchzuführenden Verfahrensschritte dient. Eine Starttaste **6** dient zum Einschalten des Gerätes, zum Starten einer Messung und zum Bestätigen der einzelnen Schritte des Messvorgangs. Eine Kalibriertaste **7** dient zum Starten eines Kalibriervorgangs und zum Bestätigen der einzelnen Schritte des Kalibriervorgangs. Zwei Pfeiltasten **8** und **9** dienen zum Auswählen von Menüpunkten sowie zum Ändern von Parametern. Eine Ok-Taste **10** dient zum Bestätigen von Eingaben sowie zum Aufrufen des Menüs, in dem die Parameter des Gerätes eingestellt werden können. Das Gehäuse **1** enthält weiterhin eine Schnittstelle zu einem PC, eine Stromversorgung, Mittel zur elektronischen Messwertverarbeitung und Mittel zum Speichern von Mess- und Eingabewerten. Das Sensorgehäuse **2** enthält eine LED-Lichtquelle, eine Optik zum Erzeugen eines konfokalen Strahlengangs mittels eines optischen Filters, eine Photodiode zum Erfassen des emittierten Lichtes sowie eine Elektronik zur Signalaufbereitung.

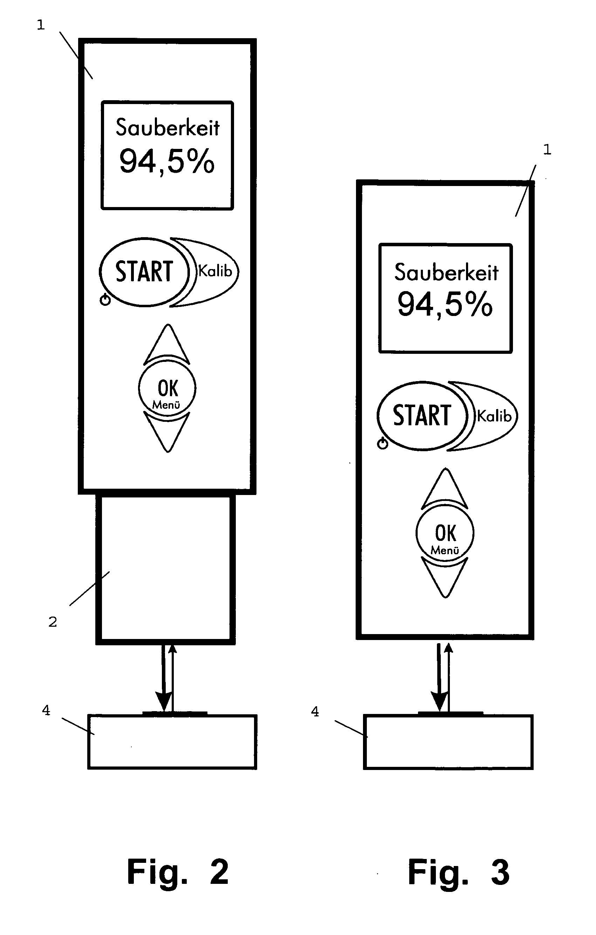

**Fig. 2** zeigt eine besonders vorteilhafte Ausführung der Vorrichtung als Handmessgerät, bei der das Gehäuse **1** und das Sensorgehäuse **2** direkt über einen Steckverbinder verbunden sind und die Vorrichtung in dieser Ausführung einfach mit einer Hand bedient werden kann, wobei auch eine Verbindung über das Verbindungskabel **3** (**Fig. 1**) möglich ist.

**Fig. 3** zeigt eine weitere besonders vorteilhafte Ausführung der Vorrichtung als Handmessgerät, bei der auch alle Komponenten aus dem Sensorgehäuse 2 im Gehäuse 1 integriert sind und so eine noch kleinere und leichtere für Messungen mit einer Hand geeignete Vorrichtung bildet.

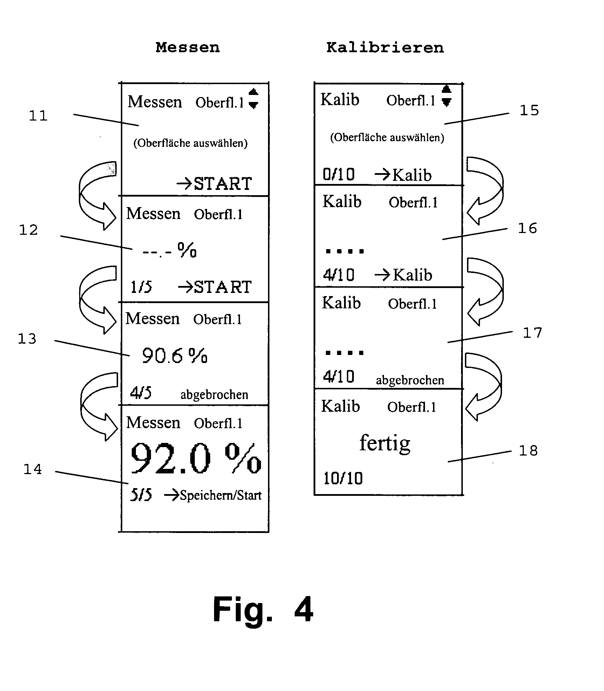

Anhand **Fig. 4** soll das erfindungsgemäße Verfahren und dessen Durchführung mittels der Ausführung der Vorrichtung gemäß **Fig. 1** näher erläutert werden. Nach dem Einschalten der Vorrichtung mit der Starttaste **6** wird auf dem Display **5** ein Inhalt **11** angezeigt. Der Nutzer kann mit den Pfeiltasten **8** und **9** eine zu kontrollierende Teileklasse, für die im Vorfeld der Zusammenhang zwischen der Intensität der Fluoreszenz und der Sauberkeit oder Verschmutzung ermittelt wurde, hier beispielsweise durch "Surf.1" angezeigt, auswählen. Nach der Auswahl einer Teileklasse kann der Nutzer eine Messung, durch Betätigen der Starttaste **6** starten. Der Nutzer positioniert das Sensorgehäuse **2** mit den enthaltenen Teilen der Vorrichtung über einem beispielsweise durch eine Schablone vorgegebenen Initialisierungspunkt auf der Bauteiloberfläche. Die Vorrichtung führt zunächst nach dem Betätigen der Starttaste **6** automatisch eine Initialisierungsmessung mit beispielsweise 10 Einzelmessungen zum Eliminieren der Anfangsdrift der Vorrichtung, welche durch das Erwärmen der optischen Bauelemente verursacht wird, durch. Im Folgenden wird ein Displayinhalt **12** angezeigt. Der Nutzer wird mit dem Hinweis "1/5" aufgefordert den ersten Messpunkt von hier beispielsweise 5 Messpunkten zu erfassen. Durch Betätigen der Starttaste **6** erfolgen automatisch beispielsweise **10** Einzelmessungen der Intensität der Fluoreszenz des Messpunkts, von denen anschließend automatisch die Ausreißer beseitigt und der Mittelwert gebildet wird. Der Messwert wird automatisch anhand des vorher ermittelten Zusammenhangs zwischen der Intensität der Fluoreszenz und z.B. der Sauberkeit berechnet und im Display angezeigt, wie ein Displayinhalt **13** mit der Ausgabe "90.6%" zeigt. Nach dem Durchführen der Messungen auf hier beispielsweise 5 Messpunkten erfolgt durch die Vorrichtung automatisch die Auswahl des Messwertes des Messpunktes mit der kleinsten Sauberkeit oder der größten Verschmutzung. Dieser Messwert wird als Messergebnis angezeigt, siehe Displayinhalt **14** mit der Ausgabe "92.0%", und kann anschließend durch den Nutzer, beispielsweise durch langes Drücken der Ok-Taste **10**, gespeichert werden.

Ein Kalibriervorgang zum Ermitteln des Zusammenhangs zwischen der Intensität der Fluoreszenz sowie beispielsweise der Sauberkeit kann nach Einschalten der Vorrichtung durch Betätigen der Kalibriertaste **7** gestartet werden. Der Nutzer kann anschließend mit den Pfeiltasten **8** und **9** die zu kalibrierende Teileklasse wählen, welche im Displayinhalt **15** beispielsweise durch "Surf.1" angezeigt wird. Analog dem Messvorgang erfolgt nach Betätigung der Kalibriertaste **7** zunächst eine Initialisierungsmessung auf einem Initialisierungsmesspunkt. Für das Kalibrieren, beispielsweise auf einem Metallblech, kann dieses mittels eines geeigneten Lösungsmittels vorher gereinigt werden und anschließend getrocknet werden. Dabei ist das Metallblech so zu handhaben, dass keine erneute Verschmutzung, beispielsweise durch einen Fingerabdruck, aufgebracht wird. Nach abgeschlossener Initialisierungsmessung kann der Nutzer durch erneutes Betätigen der Kalibriertaste **7** die Messungen auf dem ersten Kalibrierpunkt von beispielsweise 10 Kalibrierpunkten auf der Oberfläche durchführen. Dabei werden automatisch beispielsweise 10 Einzelmessungen durchgeführt. Anschließend erfolgt automatisch eine Ausreißerbeseitigung und Mittelung der Einzelmessungen des aktuellen Messpunktes. Mittels der Kalibriertaste **7** kann der Nutzer nach abgeschlossener Messung eines Messpunkts die Messung des nächsten Messpunkts starten. Nach Abschluss der Kalibriermessungen der beispielsweise 10 Messpunkte erfolgt eine automatische Ausreißerbeseitigung und Mittelung der Messergebnisse der Messpunkte. Anschließend wird dem Messergebnis der Kalibrierung automatisch der Sauberkeitswert 100% zugewiesen und im Speicher der Vorrichtung abgelegt.

Bei diesem Ausführungsbeispiel ist der Wert '0% sauber' in der Vorrichtung gespeichert, so dass der Nutzer nur eine Kalibrierprobe benötigt, was den Kalibrieraufwand deutlich vermindert. Die dem Sauberkeitswert 0% zugewiesene Intensität der Fluoreszenz wurde im Vorfeld durch Messungen anhand von Beispielprozessen ermittelt und kann durch den Nutzer verändert werden. Zwischen dem Wert '100% sauber' und '0% sauber' wird durch die Vorrichtung in diesem Ausführungsbeispiel eine lineare Funktion, welche aus dem Messwert der Intensität der Fluoreszenz den jeweiligen Sauberkeitswert berechnet, ermittelt. Anhand von Referenzproben, bei denen die Sauberkeit gerade noch den Anforderungen des Nachfolgeprozesses entspricht, kann durch den Nutzer ein Sauberkeitswert in % festgelegt werden, der den Grenzwert zwischen der Klasse ,hinreichend sauber' und 'unzureichend sauber' festlegt.

## Patentansprüche

1. Verfahren zum Erfassen der Sauberkeit oder der Verschmutzung einer Teileoberfläche durch Messen der Intensität der Eigenfluoreszenz der Verschmutzung sowie einer vorhergehenden Kalibrierung auf Bezugsoberflächen,
**dadurch gekennzeichnet,**
**dass** ein Zusammenhang zwischen der Intensität der Fluoreszenz und der Sauberkeit oder Verschmutzung der Teileoberfläche hergestellt und benutzt wird.

2. Verfahren nach Anspruch 1,
**dadurch gekennzeichnet,**
**dass** der Zusammenhang durch eine oder mehrere Kennlinie(n) hergestellt wird, wobei ein erster Parameter der Kennlinie(n) durch Messung auf mindestens einem als sauber definierten Teil und mindestens ein weiterer Parameter durch Messung auf mindestens einem als verschmutzt definierten Teil ermittelt oder erfahrungsbasiert festgelegt wird.

3. Verfahren nach Anspruch 1 oder 2,
**dadurch gekennzeichnet,**
**dass** die Sauberkeit bzw. Verschmutzung in Prozent oder einer definierten Sauberkeitsklasse zugeordnet ausgegeben wird.

4. Verfahren nach einem der Ansprüche 1 bis 3,
**dadurch gekennzeichnet,**
**dass** während einer automatischen Programmfolge mindestens ein vorgegebener oder frei wählbarer Messpunkt gemessen wird, wobei Algorithmen zum automatischen Minimieren von systematischen und zufälligen Einflüssen verwendet werden.

5. Verfahren nach einem der Ansprüche 1 bis 4,
**dadurch gekennzeichnet,**
**dass** beim Messen mehrerer Messpunkte ein Messwert eines oder mehrerer Messpunkte mit der kleinsten Sauberkeit oder der größten Verschmutzung ausgegeben wird.

6. Verfahren nach einem der Ansprüche 1 bis 5,
**dadurch gekennzeichnet,**
**dass** an Hand der ermittelten Messwerte automatisch eine direkte Prozessbeeinflussung vorgenommen wird.

7. Vorrichtung zum Erfassen der Sauberkeit oder der Verschmutzung einer Teileoberfläche durch Messen der Intensität der Eigenfluoreszenz der Verschmutzung sowie einer vorhergehenden Kalibrierung auf Bezugsoberflächen,
**dadurch gekennzeichnet,**
**dass** die Vorrichtung mindestens enthält:
eine Strahlungsquelle zum Anregen der Eigenfluoreszenz der Verschmutzung, einen Sensor zum Messen der Intensität der Fluoreszenz, einen Mikroprozessor, einen Speicher zur Ablage der Kennlinien, die einen Zusammenhang zwischen der Intensität der Fluoreszenz und der Sauberkeit oder der Verschmutzung herstellen, eine Schnittstelle zum Ausgeben der Messwerte, eine Schnittstelle zum Steuern des Messgerätes, eine Stromversorgung, ein Gehäuse und ein Programm zur Nutzerführung.

8. Vorrichtung nach Anspruch 7,
**dadurch gekennzeichnet,**
**dass** die Vorrichtung aus einem ersten Gehäuse (1) mit Bedien- und Anzeigemitteln und einem über ein Verbindungskabel (3) oder eine Steckverbindung angeschlossenes zweites Gehäuse (2) mit einer Sensorik besteht.

9. Vorrichtung nach Anspruch 7,
**dadurch gekennzeichnet,**
**dass** die Vorrichtung aus einem Gehäuse (1) mit Bedien- und Anzeigemitteln sowie einer Sensorik besteht.

10. Vorrichtung nach einem der Ansprüche 7 bis 9,
**dadurch gekennzeichnet,**
**dass** die Bedien- und Anzeigemittel mindestens ein Display (5) zur Messwertausgabe und Anzeige von Vorrichtungszuständen, Vorrichtungsparametern und Bedienungshilfen, eine Starttaste (6) zum Einschalten der Vorrichtung und Starten von Messvorgängen sowie eine Kalibriertaste (7) zum Starten von Kalibriervorgängen enthält.

11. Vorrichtung nach einem der Ansprüche 7 bis 9,
**dadurch gekennzeichnet,**
**dass** die Sensorik mindestens eine LED-Lichtquelle, eine Optik zum Erzeugen eines konfokalen Strahlengangs mittels eines optischen Filters, eine Photodiode zum Erfassen des emittierten Lichtes sowie eine Elektronik zur Signalverarbeitung enthält.

12. Vorrichtung nach einem der Ansprüche 7 bis 11,
**gekennzeichnet durch**
eine Ausbildung als Handmessgerät.

## Geänderte Patentansprüche

### Geänderte Patentansprüche gemäss Regel 137(2) EPÜ.

**1.** Verfahren zum Erfassen der Sauberkeit oder der Verschmutzung einer Metallteileoberfläche durch Messen der Intensität der Eigenfluoreszenz der Verschmutzung sowie einer vorhergehenden Kalibrierung auf Bezugsoberflächen, wobei durch eine oder mehrere Kennlinien ein Zusammenhang zwischen der Intensität der Fluoreszenz und der Sauberkeit oder Verschmutzung der Metallteileoberfläche hergestellt und benutzt wird,
indem ein erster Parameter der Kennlinie(n) durch Messung auf mindestens einem als sauber definierten Metallteil und mindestens ein weiterer Parameter durch Messung auf mindestens einem als verschmutzt definierten Metallteil ermittelt oder erfahrungsbasiert festgelegt wird,
**dadurch gekennzeichnet,**
**dass** beim Messen mehrerer Messpunkte ein Messwert eines oder mehrerer Messpunkte mit der kleinsten Sauberkeit oder der größten Verschmutzung ermittelt und dessen Sauberkeit bzw. Verschmutzung in Prozent (%) oder einer definierten Sauberkeitsklasse bzw. Verschmutzungsklasse zugeordnet ausgegeben wird.
*(in Anspruch 1 eingearbeitet)*
*(in Anspruch 1 eingearbeitet)*

**2.** Verfahren nach Anspruch 1,
**dadurch gekennzeichnet,**
**dass** während einer automatischen Programmfolge mindestens ein vorgegebener oder frei wählbarer Messpunkt gemessen wird, wobei Algorithmen zum automatischen Minimieren von systematischen und zufälligen Einflüssen verwendet werden.
*(in Anspruch 1 eingearbeitet)*

**3.** Verfahren nach Anspruch 1 oder 2,
**dadurch gekennzeichnet,**
**dass** an Hand der ermittelten Messwerte automatisch eine direkte Prozessbeeinflussung vorgenommen wird.

**4.** Verfahren nach einem der vorstehenden Ansprüche,
**gekennzeichnet durch**
ein Handmessgerät zum Durchführen des Verfahrens mit mindestens einer Strahlungsquelle zum Anregen der Eigenfluoreszenz der Verschmutzung, einem Sensor zum Messen der Intensität der Fluoreszenz, einem Mikroprozessor, einem Speicher zur Ablage der Kennlinien, die einen Zusammenhang zwischen der Intensität der Fluoreszenz und der Sauberkeit oder der Verschmutzung herstellen, einer Schnittstelle zum Ausgeben der Messwerte, einer Schnittstelle zum Steuern des Messgerätes, einer Stromversorgung, einem Gehäuse und einem Programm zur Nutzerführung.

**5.** Verfahren nach Anspruch 4,
**dadurch gekennzeichnet,**
**dass** die Vorrichtung aus einem ersten Gehäuse (1) mit Bedien- und Anzeigemitteln und einem über ein Verbindungskabel (3) oder eine Steckverbindung angeschlossenes zweites Gehäuse (2) mit einer Sensorik besteht.

**6.** Verfahren nach Anspruch 4,
**dadurch gekennzeichnet,**
**dass** die Vorrichtung aus einem Gehäuse (1) mit Bedien- und Anzeigemitteln sowie einer Sensorik besteht.

**7.** Verfahren nach einem der Ansprüche 4 bis 6,
**dadurch gekennzeichnet,**
**dass** die Bedien- und Anzeigemittel mindestens ein Display (5) zur Messwertausgabe und Anzeige von Vorrichtungszuständen, Vorrichtungsparametern und Bedienungshilfen, eine Starttaste (6) zum Einschalten der Vorrichtung und Starten von Messvorgängen sowie eine Kalibriertaste (7) zum Starten von Kalibriervorgängen enthält.

**8.** Verfahren nach einem der Ansprüche 4 bis 7,
**dadurch gekennzeichnet,**
**dass** die Sensorik mindestens eine LED-Lichtquelle, eine Optik zum Erzeugen eines konfokalen Strahlengangs mittels eines optischen Filters, eine Photodiode zum Erfassen des emittierten Lichtes sowie eine Elektronik zur Signalverarbeitung enthält.
*(in Anspruch 4 eingearbeitet)*
